# EUROPÄISCHE PATENTANMELDUNG

(11) **EP 4 686 858 A1**
(43) Veröffentlichungstag der Anmeldung: **04.02.2026**
(21) Anmeldenummer: 25168424.7
(22) Anmeldetag: 04.04.2025
(51) Int. Cl.: F16H 61/04, F16H 59/46, F16H 63/50, F16H 59/68, F16H 61/28, F16D 11/14

(54) **VERFAHREN ZUM BETÄTIGEN EINER KLAUENKUPPLUNG EINES WECHSELGETRIEBES EINES ELEKTRISCH ANTREIBBAREN FAHRZEUGS UND VORRICHTUNG ZUR DURCHFÜHRUNG DES VERFAHRENS**

(30) Priorität: 31.07.2024 EP 24192050
(71) Anmelder: ZF CV Systems Global GmbH, 3006 Bern (CH)
(72) Erfinder: CALLESEN, Matthias, 30974 Wennigsen (DE); Karstens, Hauke, 30926 Stöckenerstr. 9b (DE)
(74) Vertreter: Rabe, Dirk-Heinrich

(57) **Zusammenfassung**

Die Erfindung betrifft ein Verfahren und eine Vorrichtung zum Betätigen einer Klauenkupplung (6) eines Wechselgetriebes (2) eines elektrisch antreibbaren Fahrzeugs (1), bei dem zumindest relative Drehzahlen und/oder Drehwinkelstellungen einer Schiebemuffe (7) und eines Kupplungskörper (12) zueinander ermittelt werden, und bei dem wenigstens eine elektrische Antriebsmaschine (5) des Fahrzeugs (1) und/oder ein elektrischer Aktuator (16) eines Schaltelements (15) in Abhängigkeit von den ermittelten Drehzahlen und/oder Drehwinkelstellungen elektronisch gesteuert werden, um eine mögliche Zahn-auf Zahn-Stellung beim Schalten einer formschlüssigen Verbindung zwischen dem Kupplungskörper (12) und der Schiebemuffe (7) zu vermeiden. Im Fall einer vorhergesagten Zahn-auf-Zahn-Stellung werden Steuerungsmaßnahmen an der zumindest einen elektrischen Antriebsmaschine (5) und/oder an dem elektrischen Aktuator (16) des Schaltelements (15) durchgeführt, welche die relative Drehwinkelstellung der Schiebemuffe (7) und des Kupplungskörpers (12) zueinander und/oder die Bewegungsdauer der Schiebemuffe (7) derartig verändern, dass beim Erreichen einer Eingriffsposition ein verzögerungsfreies formschlüssiges Einspuren von zugeordneten Klauenverzahnungen (10, 13) erfolgt.

## Beschreibung

Die Erfindung betrifft ein Verfahren zum Betätigen einer Klauenkupplung eines Wechselgetriebes eines elektrisch antreibbaren Fahrzeugs, wobei das Wechselgetriebe mindestens eine Eingangswelle und eine Ausgangswelle aufweist, wobei die wenigstens eine Eingangswelle mit zumindest einer elektrischen Antriebsmaschine des Fahrzeugs antriebswirksam verbunden ist, wobei eine Schiebemuffe drehfest und axial verschiebbar auf der Eingangswelle oder einer anderen mit der Eingangswelle antriebsverbundenen oder antriebsverbindbaren Getriebewelle angeordnet ist sowie eine erste Klauenverzahnung aufweist, wobei ein Kupplungskörper drehbar und axial unverschiebbar auf der Eingangswelle, der Ausgangswelle oder einer anderen mit der Ausgangswelle antriebsverbundenen oder antriebsverbindbaren Getriebewelle angeordnet ist sowie eine zweite Klauenverzahnung aufweist, wobei die Schiebemuffe zum Erzeugen einer formschlüssigen Verbindung mit dem Kupplungskörper mittels eines von einem elektrischen Aktuator betätigbaren Schaltelements axial bewegbar ist, und bei dem zum Erzeugen der formschlüssigen Verbindung zumindest relative Drehzahlen und/oder Drehwinkelstellungen der relativ zueinander drehbaren Schiebemuffe sowie des Kupplungskörpers ermittelt werden, und bei dem die wenigstens eine elektrische Antriebsmaschine und/oder der elektrische Aktuator in Abhängigkeit von den ermittelten Drehzahlen und/oder Drehwinkelstellungen elektronisch derartig gesteuert werden, dass beim Verschieben der Schiebemuffe zur Kopplung der beiden Klauenverzahnungen eine Zahn-auf-Zahn-Stellung der beiden Klauenverzahnungen vermieden wird. Außerdem betrifft die Erfindung eine Vorrichtung zur Durchführung eines solchen Verfahrens.

In Antriebsstrangkonzepten von elektrisch antreibbaren Fahrzeugen, insbesondere von Nutzfahrzeugen, ist in der Regel ein Wechselgetriebe mit wenigstens zwei Übersetzungsstufen vorgesehen. Zum Schalten der Übersetzungsstufen sollen bei solchen Fahrzeugen vorzugsweise unsynchronisierte Klauenkupplungen zum Einsatz kommen.

Die Nutzung von Synchronisierungseinrichtungen, welche einen Mehraufwand an Herstellungskosten sowie einen erhöhten Verbrauch an elektrischer Energie durch zusätzliche zu bewegende Massen und Reibverluste verursachen, kann dadurch vermieden werden.

Bekannte Klauenkupplungen weisen zwei Kupplungshälften auf, an deren Stirnseiten komplementäre Reihen von Klauenverzahnungen in Umfangsrichtung ausgebildet sind. Bei eingerückter Kupplung greifen die Zähne beziehungsweise Klauen jeder Kupplungshälfte in die Lücken zwischen den Zähnen der jeweils anderen Kupplungshälfte ein und stellen dadurch eine formschlüssige, drehfeste Verbindung her. Eine Kupplungshälfte ist als eine antreibende und die andere Kupplungshälfte als eine antreibbare Komponente angeordnet. Bei der antreibenden Kupplungshälfte handelt es sich üblicherweise um eine Schiebemuffe, welche drehfest und axial beweglich auf einer Eingangswelle des Getriebes angeordnet ist. Diese Eingangswelle ist unmittelbar oder mittelbar mit dem Rotor von zumindest einer elektrischen Antriebsmaschine des Fahrzeugs gekoppelt.

Bei der antreibbaren Kupplungshälfte handelt es sich um einen Kupplungskörper, welcher beispielsweise mit einem Losrad einer Stirnradstufe fest verbunden oder ein Bestandteil dieses Losrads ist. Das Losrad der Stirnradstufe ist drehbar beispielsweise auf der Eingangswelle angeordnet und steht im Eingriff mit einem auf einer Abtriebswelle oder Ausgangswelle drehfest angeordneten Festrad. Die Schiebemuffe ist mittels eines Schaltelements, beispielsweise eine Schaltgabel, mit einem Aktuator, beispielsweise in Form einer Schaltwalze, kraftschlüssig verbunden. Die Schaltwalze ist mit dem Rotor eines elektrischen Drehantriebs drehfest verbunden und dadurch um ihre Längsachse drehbar antreibbar. Beispielsweise ist die Schaltgabel in einer Kulisse oder einer Verzahnung der Schaltwalze geführt, sodass eine elektrisch gesteuerte Drehbewegung der Schaltwalze in eine Axialbewegung der Schaltgabel umgesetzt wird, wobei die Schaltgabel die Schiebemuffe mitnimmt. Durch ein Einrücken der Schiebemuffe in den Kupplungskörper des Losrads wird das Losrad mit der antreibenden Eingangswelle drehfest verbunden, um die betreffende Übersetzungsstufe einzuschalten und den elektrischen Antrieb des Fahrzeugs kraftschlüssig mit der Abtriebswelle zu verbinden.

Ohne eine Synchronisierungseinrichtung kann es allerdings beim Einrücken der Schiebemuffe sowohl im Fahrbetrieb als auch im Fahrzeugstillstand zu Lastschlägen und erhöhtem Verschleiß aufgrund einer sogenannten Zahn-auf-Zahn-Stellung kommen, wobei sich die Zähne der Schiebemuffe und des Kupplungskörpers des Losrads paarweise gegenüberstehen, sodass zunächst keine formschlüssige Verbindung der beiden Kupplungshälften hergestellt werden kann. Zum Einspuren der Klauen in die Zahnlücken müssen die beiden Kupplungshälften daher aus einer unpassenden Drehwinkellage soweit gegeneinander verdreht werden, bis die Klauen die gegenüberliegenden Zahnlücken gefunden haben. Zur Auflösung von derartigen unerwünschten Zahn-auf-Zahn-Stellungen von Klauenkupplungen in Wechselgetrieben von Elektro- oder Hybridfahrzeugen sind bereits verschiedene Verfahren bekannt.

Aus der DE 10 2022 114 826 A1 ist ein Verfahren zur Steuerung einer Klauenkupplung bekannt, bei dem eine auf einer elektromotorisch antreibbaren Getriebewelle drehfest und axial bewegbar angeordnete Schiebemuffe mittels eines elektronisch steuerbaren Aktuators in Form einer Schaltwalze in Richtung eines Klauenelements eines auf der Getriebewelle angeordneten Losrades verschiebbar ist, um dieses Losrad mit der Getriebewelle drehfest zu koppeln. Hierdurch wird eine Leistungsübertragung von dem Elektromotor über ein mit dem Losrad im Eingriff stehendes Festrad auf eine Abtriebswelle ermöglicht. Die Schiebemuffe weist hierzu ein Führungselement auf, das in einer Schaltkulisse der Schaltwalze geführt ist, um eine Rotation der Schaltwalze in eine translatorische Verschiebung des Führungselements samt der Schiebemuffe umzusetzen. Ein Einrückvorgang der Klauenkupplung erfolgt in mehreren Regelungsphasen, bei denen verschiedene Sollgeschwindigkeiten, Sollkräfte sowie Drehmomente vorgegeben werden, um die Schaltdauer zu reduzieren und gleichzeitig ein sanftes Einkoppeln der Schiebemuffe zu ermöglichen. Dabei befinden sich die Schiebemuffe und das Klauenelement zwischenzeitlich in einer Reibphase bei stirnseitigem Kontakt, in der die Drehzahlen dieser beiden Bauteile synchronisiert werden, bevor das vollständige Einrücken der Schiebemuffe erfolgt.

Die DE 10 2021 104 101 A1 offenbart ein Verfahren zur Steuerung eines Wechselgetriebes mit mindestens zwei unsynchronisierten Übersetzungsstufen. Darin wirken Schaltelemente in Form von Schaltgabeln auf Schiebemuffen, welche mit Zahnradpaarungen in Eingriff bringbar sind, wobei die Schaltelemente im Eingriff mit einer in definierte Winkellagen verdrehbaren Schaltwalze stehen. Die Schaltwalze ist zum Wechseln von Übersetzungsstufen mit einem elektromotorischen Antrieb drehbar verbunden. Dem elektromotorischen Antrieb ist eine Einrichtung zur Erfassung der elektrischen Ströme beim Betätigen der Schaltwalze zugeordnet. Bei einem Wechsel einer aktuellen Übersetzungsstufe in eine neue Übersetzungsstufe, welcher mit einem misslungenen oder unvollständigen Eingriff aufgrund einer Zahn-auf-Zahn-Stellung der Schiebemuffe mit dem Zahnrad der Zielübersetzungsstufe einhergeht, wird zunächst ein invertierter elektrischer Schaltimpuls zur Zurückbewegung der Schiebmuffe ohne Herstellung eines Eingriffs mit dem Zahnrad der Ausgangsübersetzungsstufe erzeugt. Daraufhin werden die Bewegungsgeschwindigkeit und der Bewegungsverlauf der Schaltgabel und/oder der diese ansteuernden Schaltwalze gemessen und mittels eines dafür vorgesehenen Algorithmus analysiert. Unter Nutzung des Analyseergebnisses wird dann ein neuer, verstärkter und/oder verlängerter elektrischer Schaltimpuls für die Bewegung der Schaltgabel zum erneuten Eingreifen der Schiebemuffe mit dem Zahnradpaar der Zielstufe erzeugt.

Aus der DE 10 2021 001 425 A1 ist eine Klauenkupplung und ein Verfahren zu deren Betrieb bekannt, wobei mit einer Erfassungseinrichtung die jeweiligen Drehwinkelstellungen von zwei relativ zueinander drehbaren Klauenhälften der Klauenkupplung erfasst werden. Die beiden Klauenhälften sind entlang einer Drehachse relativ zueinander zwischen einer Koppelstellung und einer Entkoppelstellung verschiebbar. In der Koppelstellung greifen die Schaltverzahnungen ineinander, wodurch die Klauenhälften formschlüssig und drehfest miteinander verbunden sind. Die Erfassungseinrichtung weist eine an die Zähne angepasste Anzahl von Gebersegmenten auf, welche an einer drehenden der beiden Klauenhälften in Umfangsrichtung um eine Drehachse angeordnet sind. Eine Fehlstelle zwischen zwei benachbarten Gebersegmenten wirkt als eine Referenzstellung, aus welcher eine Referenzlage der drehenden Klauenhälfte zu der drehfesten Klauenhälfte vorgegeben ist. Die beiden Klauenhälften werden durch eine elektronische Steuerungseinrichtung mittels einer elektrischen Maschine in Abhängigkeit der erfassten Drehwinkelstellungen in eine Koppelstellung bewegt, wobei Zahn-auf-Zahn-Stellungen der beiden Klauenhälften vermieden werden sollen. Um eine Zahn-auf-Zahn-Stellung zu vermeiden, wird anhand der erfassten Drehwinkelstellungen der beiden Klauenhälften festgestellt, ob ein Einspuren erfolgen kann oder nicht. Dementsprechend wird ein Betätigungszeitpunkt bestimmt, zu dem die elektronische Steuereinrichtung die Kupplungshälften relativ zueinander in eine Koppelstellung bewegt.

Vor diesem Hintergrund liegt der Erfindung die Aufgabe zugrunde, ein verbessertes Verfahren zum Betätigen einer Klauenkupplung eines Wechselgetriebes eines elektrisch antreibbaren Fahrzeugs vorzustellen, welches ein schnelles Schließen der Klauenkupplung ermöglicht und dabei Zahn-auf-Zahn-Stellungen zuverlässig verhindert. Ein solches Verfahren soll insbesondere für einen Betrieb an einem elektrischen Antriebsstrang eines Nutzfahrzeugs geeignet sein. Außerdem soll eine Vorrichtung zur Durchführung eines solchen Verfahrens vorgestellt werden.

Die Lösung dieser Aufgaben ergibt sich aus den Merkmalen der unabhängigen Ansprüche, während vorteilhafte Ausgestaltungen und Weiterbildungen der Erfindung den zugeordneten Unteransprüchen entnehmbar sind.

Die Erfindung betrifft demnach ein Verfahren zum Betätigen einer Klauenkupplung eines Wechselgetriebes eines elektrisch antreibbaren Fahrzeugs, wobei das Wechselgetriebe mindestens eine Eingangswelle und eine Ausgangswelle aufweist, wobei die wenigstens eine Eingangswelle mit zumindest einer elektrischen Antriebsmaschine des Fahrzeugs antriebswirksam verbunden ist, wobei eine Schiebemuffe drehfest und axial verschiebbar auf der Eingangswelle oder einer anderen mit der Eingangswelle antriebsverbundenen oder antriebsverbindbaren Getriebewelle angeordnet ist sowie eine erste Klauenverzahnung aufweist, wobei ein Kupplungskörper drehbar und axial unverschiebbar auf der Eingangswelle, der Ausgangswelle oder einer anderen mit der Ausgangswelle antriebsverbundenen oder antriebsverbindbaren Getriebewelle angeordnet ist sowie eine zweite Klauenverzahnung aufweist, wobei die Schiebemuffe zum Erzeugen einer formschlüssigen Verbindung mit dem Kupplungskörper mittels eines von einem elektrischen Aktuator betätigbaren Schaltelements axial bewegbar ist, und bei dem zum Erzeugen der formschlüssigen Verbindung zumindest relative Drehzahlen und/oder Drehwinkelstellungen der relativ zueinander drehbaren Schiebemuffe sowie des Kupplungskörpers ermittelt werden, und bei dem die wenigstens eine elektrische Antriebsmaschine und/oder der elektrische Aktuator in Abhängigkeit von den ermittelten Drehzahlen und/oder Drehwinkelstellungen elektronisch derartig gesteuert werden, dass beim Verschieben der Schiebemuffe zur Kopplung der beiden Klauenverzahnungen eine Zahn-auf-Zahn-Stellung der beiden Klauenverzahnungen vermieden wird.

Zur Lösung der verfahrensbezogenen Aufgabe sieht die Erfindung vor, dass zum Erzeugen der formschlüssigen Verbindung der beiden Klauenverzahnungen zum Zeitpunkt der Betätigung der Schiebemuffe ausgehend von einer definierten Neutralstellung die Drehwinkelstellungen und die Drehzahlen der Schiebemuffe sowie des Kupplungskörpers relativ zueinander bestimmt werden, dass ausgehend vom Zeitpunkt der Betätigung der Schiebemuffe ein voraussichtlicher Eingriffszeitpunkt zum Einspuren der Klauenverzahnung der Schiebemuffe in die Klauenverzahnung des Kupplungskörpers an einer definierten Eingriffsposition anhand einer vorgegebenen Stellgeschwindigkeitskurve sowie des zuvor ermittelten Stellwegs der Schiebemuffe zwischen deren Neutralstellung und deren Eingriffsposition berechnet wird, dass die voraussichtlichen Drehwinkelstellungen der Schiebemuffe und des Kupplungskörpers relativ zueinander zum Eingriffszeitpunkt berechnet werden, dass eine Zahn-auf-Zahn-Stellung oder keine Zahn-auf-Zahn-Stellung zum berechneten Eingriffszeitpunkt anhand der voraussichtlichen Drehwinkelstellungen der Schiebemuffe und des Kupplungskörpers relativ zueinander vorhergesagt wird, und dass im Fall einer vorhergesagten Zahn-auf-Zahn-Stellung Steuerungsmaßnahmen an der wenigstens einen elektrischen Antriebsmaschine und/oder an dem die Schiebemuffe betätigenden elektrischen Aktuator durchgeführt werden, welche die relative Drehwinkellage der Schiebemuffe und des Kupplungskörpers zueinander und/oder die Bewegungsdauer der Schiebemuffe während des Schaltvorgangs derartig verändern, dass beim Erreichen der Eingriffsposition ein verzögerungsfreies formschlüssiges Einspuren der Klauenverzahnungen erfolgen wird.

Wie definiert, kann der mit diesem Verfahren steuerbare Antriebsstrang nur eine elektrische Antriebsmaschine oder mehrere elektrische Antriebsmaschinen aufweisen, mit denen die zumindest eine Eingangswelle des Wechselgetriebes antreibbar ist.

Unter einem Betätigungszeitpunkt bei der Betätigung der Klauenkupplung wird derjenige Zeitpunkt verstanden, zu dem eine Axialbewegung der Schiebemuffe gestartet wird. Unter dem Begriff der Eingriffsposition der Klauenkupplung wird eine axiale Stellung der Klauenkupplung verstanden, an welcher die gegenüberliegenden stirnseitigen Enden der Klauen der beiden miteinander zu koppelnden Klauenverzahnungen auf einer gedachten Linie liegen. Unter dem Begriff Eingriffszeitpunkt der Klauenkupplung wird derjenige Zeitpunkt verstanden, zu dem die Schiebemuffe die Eingriffsposition erreicht. Die einer Schiebemuffe zugeordnete Stellgeschwindigkeitskurve beschreibt den Geschwindigkeitsverlauf der Schiebemuffe zwischen dem Betätigungszeitpunkt und dem Eingriffszeitpunkt. Unter dem Stellweg der Schiebemuffe wird die axiale Strecke zwischen deren Neutralstellung und der Eingriffsposition verstanden. Der Verlauf der Stellgeschwindigkeitskurve und die Länge des Stellwegs bestimmen bei einem Schaltvorgang des Getriebes demnach die Betätigungsdauer der Schiebemuffe bis zum Erreichen der Eingriffsposition.

Durch das Verfahren mit den Merkmalen der Erfindung kann bei einer unsynchronisierten Klauenkupplung eine formschlüssige Verbindung der miteinander zu koppelnden Kupplungshälften, also der Schiebemuffe und des Kupplungskörpers, unter Vermeidung von Zahn-auf-Zahn-Stellungen schnell und sicher hergestellt werden. Insbesondere entfällt es vorteilhaft, mögliche Zahn-auf Zahn-Stellungen aufzulösen, bei denen die in Eingriff zu bringenden, relativ zueinander drehenden Kupplungshälften zunächst über einen Reibkontakt der Klauen synchronisiert werden müssen, bevor die Klauenverzahnungen eingespurt werden können. Außerdem können nunmehr zeitliche Unterbrechungen von Schaltvorgängen weitgehend vermieden oder zumindest minimiert werden. Mit dem Verfahren gemäß der Erfindung ist beim Aufeinandertreffen der Klauenverzahnungen demnach bereits eine Drehwinkellage vorhanden, welche das sofortige widerstandsfreie Einspuren der Zähne der Klauenkupplung ermöglicht.

Das Verfahren kann an einer einzelnen Klauenkupplung in einem elektrischen Antriebsstrang sowie an jeder vorhandenen Klauenkupplung in einem Wechselgetriebe mit mehreren Klauenkupplungen durchgeführt werden. Es ist dabei vorteilhaft, wenn dieses Verfahren bei jedem Schaltvorgang des Wechselgetriebes durchgeführt wird. Dadurch ist ein einwandfreier Betrieb des Wechselgetriebes gewährleistet. Das Verfahren kann jedoch auch bei jeder anderen unsynchronisierten Klauenkupplung, welche zwar im Antriebsstrang des Fahrzeugs, jedoch außerhalb des Wechselgetriebes verbaut ist, vorteilhaft durchgeführt werden.

Dadurch, dass Zahn-auf-Zahn-Stellungen von vornherein vermieden werden, kann die mechanische Beanspruchung der Kräfte und Momente übertragenden Komponenten der Schaltelemente im Antriebsstrang reduziert werden. Dies verringert den Verschleiß und ermöglicht eine material- sowie gewichtsparende Konstruktion. Zudem wird eine bisher übliche Zeitdauer für die Auflösung von Zahn-auf Zahn-Stellungen eingespart, wodurch sich die Schaltzeit, also die Dauer einer Schaltung, verringert. Durch eine aktive Steuerung der an einer solchen Schaltung beteiligten Bauteile entstehen außerdem weniger Drehmomentunterbrechungen im Antriebstrang, wodurch sich der Fahrkomfort erhöht.

Dies wird bei dem Verfahren gemäß der Erfindung dadurch erreicht, dass bei einem Einrückvorgang der Klauenkupplung eine voraussichtliche Zahn-auf-Zahn-Stellung frühzeitig erkannt und durch geeignete Gegenmaßnahmen hinsichtlich der Steuerung der relativ zueinander drehenden Kupplungshälften verhindert wird, bevor die Schaltverzahnungen gegeneinander stoßen können.

Bei diesem Verfahren wird die Geometrie beziehungsweise die stirnseitige Kontur der komplementären Klauenverzahnungen von Schiebemuffe sowie Kupplungskörper als bekannt vorausgesetzt und kann beispielsweise in einem elektronischen Datenspeicher in einem Datensatz abgespeichert sein. Daraus ist bei bekannter Drehzahl von Schiebemuffe und Kupplungskörper diejenige Drehwinkellage der Klauenverzahnungen relativ zueinander bestimmbar, bei welcher die Zähne beziehungsweise Klauen jeder Kupplungshälfte in die Lücken zwischen den Zähnen der jeweils anderen Kupplungshälfte eingreifen und dadurch eine formschlüssige drehfeste Verbindung herstellen können.

Die Ermittlung der Drehwinkelstellungen und Drehzahlen von Schiebemuffe und Kupplungskörper kann mit bekannten Sensormitteln, wie indexierten Zahnrädern, inkrementalen Winkelgebern oder dergleichen, unmittelbar an der Schiebemuffe und an dem Kupplungskörper oder mittelbar an mit diesen gekoppelten Antriebswellen beziehungsweise Getriebewellen erfolgen. Außerdem können gegebenenfalls verfügbare Steuersignale des elektrischen Antriebs des Fahrzeugs, welche aktuelle Drehzahlen und/oder Drehstellungen von einer oder mehreren antriebsseitigen Getriebewellen anzeigen, genutzt werden. Die Drehzahldaten und/oder Drehwinkelstellungsdaten einer Abtriebswelle können beispielsweise mittels eines indexierten Zahnrads als Sensorsignalgeber erfasst werden.

Elektrische Antriebsmaschinen können bekanntermaßen durch elektronische Steuerungseinrichtungen drehzahlgenau eingestellt betrieben werden. Beispielsweise kann ein Motorsteuergerät eines elektrischen Fahrzeugantriebs eine sehr genaue Steuerung der Drehzahl einer elektrischen Antriebsmaschine ermöglichen. Demnach können Drehzahldaten einer mit einem Rotor von zumindest einer elektrischen Antriebsmaschine gekoppelten Eingangswelle, welche wiederum mit einem Schaltbauteil einer Klauenkupplung drehfest gekoppelt sein kann, jederzeit sehr genau bekannt sein beziehungsweise ermittelt werden. Diese Information kann beispielsweise von einem Motorsteuergerät einem Getriebesteuergerät und/oder einer anderen elektronischen Steuerungseinrichtung zur Verfügung gestellt werden.

Aus den erfassten Drehzahlen können die Drehwinkelgeschwindigkeiten der Schiebemuffe und des Kupplungskörpers zum Zeitpunkt der Betätigung der Schiebemuffe bestimmt werden. Ein zeitlicher Verlauf der Drehwinkelgeschwindigkeiten der Schiebemuffe und des Kupplungskörpers im Zeitraum zwischen dem Betätigungszeitpunkt der Schiebemuffe, also dem Zeitpunkt zu dem die Schiebemuffe in Bewegung gesetzt wird, und dem Eintreffen der Schiebemuffe an der Eingriffsposition, also dem Eingriffszeitpunkt, kann beispielsweise mittels eines Rechenalgorithmus auf der Basis abgespeicherter Drehzahldaten für den betreffenden Gangwechsel extrapoliert werden. Im einfachsten Fall können die jeweiligen Drehzahlen der Schiebemuffe und des Kupplungskörpers in dem betreffenden Zeitraum als konstant angenommen werden.

Eine fortlaufende Information hinsichtlich der Drehwinkelstellung der Eingangswelle kann von dem einen Antriebsmotor oder mehrere Antriebsmotore aufweisenden elektrischen Antrieb des Fahrzeugs zur Verfügung stehen. Soweit die in dem Wechselgetriebe vorhandenen drehfesten Komponenten der Klauenverzahnungen in vorab definierten und beispielsweise in einem elektronischen Speicher hinterlegten Referenzpositionen verbaut wurden, können diese Informationen zur Ermittlung aktueller und/oder zur Berechnung der voraussichtlich relativen Drehwinkelstellungen von miteinander zu verbindenden Klauenkupplungen des Getriebes für die jeweiligen Schaltvorgänge verwendet werden.

Jedenfalls können alle für das Verfahren verfügbaren relevanten Informationen einer elektronischen Steuerungseinrichtung der Klauenkupplung beziehungsweise einem zugehörigen elektronischen Datenspeicher zur weiteren Verarbeitung in der Steuerungseinrichtung zugeführt werden.

In einem ersten Verfahrensschritt kann demnach durch die Erfassung der Drehwinkelstellungen der Schiebemuffe und des Kupplungskörpers relativ zueinander eine Drehwinkellage zum Zeitpunkt der Betätigung der Schiebemuffe bei einem Schaltvorgang zum Einrücken der Klauenkupplung festgestellt werden.

In einem zweiten Verfahrensschritt wird der voraussichtliche Eingriffszeitpunkt zum Einspuren der Klauenverzahnung der Schiebemuffe in die gegenüberliegende Klauenverzahnung ermittelt. Dies kann mithilfe der vorhandenen Informationen erfolgen. Dafür können Positionsangaben einer Neutralstellung der Schiebemuffe sowie einer Eingriffsposition der Schiebemuffe zum Einspuren in den Kupplungskörper vorab definiert und in dem Datenspeicher abgespeichert sein. Außerdem kann eine Stellgeschwindigkeitskurve für die Betätigung der Schiebemuffe vorgegeben und deren Werte in einem elektronischen Speicher abgespeichert sein. Eine solche Stellgeschwindigkeitskurve gibt den zeitlichen Geschwindigkeitsverlauf der Schiebemuffe während ihrer axialen Bewegung zwischen ihrer Neutralstellung und ihrer Eingriffsposition an. Anhand dieser Informationen kann ausgehend von dem Betätigungszeitpunkt in dem zweiten Verfahrensschritt der voraussichtliche Eingriffszeitpunkt zum Einspuren der Klauenverzahnung der Schiebemuffe in die Klauenverzahnung des Kupplungskörpers hinreichend genau berechnet beziehungsweise geschätzt werden.

In einem dritten Verfahrensschritt ergibt sich aus der Drehwinkellage zum Betätigungszeitpunkt und dem berechneten Eingriffszeitpunkt unter Berücksichtigung der vorhandenen Drehzahlinformationen die relative Drehwinkellage der Klauenverzahnungen der Schiebemuffe und des Kupplungskörpers zu dem berechneten Eingriffszeitpunkt. Die vorhergesagte Drehwinkellage zum Eingriffszeitpunkt kann mit der anfänglichen Drehwinkellage übereinstimmen. In vielen Fällen wird sie jedoch davon abweichen. Sollte sich jedenfalls aus dieser Betrachtung und unter Berücksichtigung der Geometrie der Klauenverzahnungen, also der Kontur und Maße der Klauen und der Klauenlücken dazwischen, eine voraussichtliche Zahn-auf-Zahn-Stellung der Klauenverzahnungen zum Eingriffszeitpunkt ergeben, werden Gegenmaßnahmen in Form von Steuerungseingriffen eingeleitet, um diese Zahn-auf-Zahn-Stellung zu verhindern.

Diese Steuerungsmaßnahmen betreffen die Veränderung der Drehzahl der mit der Eingangswelle in Drehrichtung unmittelbar oder mittelbar gekoppelten Schiebemuffe und/oder eine Veränderung der zeitlichen Dauer der Stellbewegung der Schiebemuffe bei einem Schaltvorgang.

Entsprechend einer ersten Ausführungsform des Verfahrens gemäß der Erfindung kann vorgesehen sein, dass im Fall einer vorhergesagten Zahn-auf-Zahn-Stellung die Drehzahl der wenigstens einen Eingangswelle mittels einer Änderung der Drehzahl der zumindest einen elektrischen Antriebsmaschine so verändert wird, dass die Drehwinkelstellung der mit der Eingangswelle drehfest verbundenen Schiebemuffe bei deren Erreichen der Eingriffsposition ein verzögerungsfreies Einspuren der Klauenverzahnungen von Schiebemuffe und Kupplungskörper ermöglicht.

Diese erste Steuerungsmaßnahme hinsichtlich der antriebsseitigen Drehzahlsteuerung ist dazu geeignet, eine unpassende relative Drehwinkellage der Schiebemuffe und des Kupplungskörpers zueinander in die zum Einspuren passende Drehwinkellage zum Eingriffszeitpunkt der Schiebemuffe zu verändern. Bei dieser Steuerungsmaßnahme ist also nicht der Betätigungszeitpunkt, an dem die Schiebemuffe in Bewegung gesetzt wird, als eine Stellgröße vorgesehen. Vielmehr wird die im Kopplungszeitpunkt zu erreichende Drehwinkelstellung der Schiebemuffe durch eine zielgenaue Änderung der Drehzahl der wenigstens einen elektrischen Antriebsmaschine beziehungsweise der Eingangswelle erreicht.

Entsprechend einer zweiten Ausführungsform des Verfahrens gemäß der Erfindung kann vorgesehen sein, dass im Fall einer vorhergesagten Zahn-auf-Zahn-Stellung zunächst ausgehend von dem Zeitpunkt der Betätigung der Schiebemuffe ein neuer Eingriffszeitpunkt berechnet wird, zu dem die Drehwinkelstellungen der Schiebemuffe und des Kupplungskörpers relativ zueinander ein Einspuren der Klauenverzahnungen ermöglichen, dass anschließend eine an den neuen Eingriffszeitpunkt angepasste neue Stellgeschwindigkeitskurve der Schiebemuffe berechnet wird, und dass dann die Schiebemuffe mittels des elektrischen Aktuators gemäß der berechneten neuen Stellgeschwindigkeitskurve axial verschoben wird, um beim Erreichen der Eingriffsposition die Klauenverzahnung der Schiebemuffe verzögerungsfrei in die Klauenverzahnung des Kupplungskörpers formschlüssig einzuspuren.

Diese zweite Steuerungsmaßnahme hinsichtlich der zeitlichen Dauer der Stellbewegung der Schiebemuffe ist dazu geeignet, den Eingriffszeitpunkt der Schiebemuffe an die zum Einspuren passende Drehwinkellage anzupassen. Bei dieser Steuerungsmaßnahme ist also wiederum nicht der Betätigungszeitpunkt, an dem die Schiebemuffe in Bewegung gesetzt wird, sondern der richtige Eingriffszeitpunkt, zu dem die Schiebemuffe bei der richtigen relativen Drehwinkellagen der Schiebemuffe und des Kupplungskörpers zueinander auf den Kupplungskörper trifft, als eine Stellgröße vorgesehen.

Die beiden genannten Steuerungsmaßnahmen können vorteilhaft miteinander kombiniert werden. Darüber hinaus kann der Betätigungszeitpunkt der Schiebemuffe als eine zusätzliche Stellgröße genutzt werden.

Zur Lösung der vorrichtungsbezogenen Aufgabe betrifft die Erfindung eine Vorrichtung zum Betätigen einer Klauenkupplung eines Wechselgetriebes eines elektrisch antreibbaren Fahrzeugs, wobei das Wechselgetriebe mindestens eine Eingangswelle und eine Ausgangswelle aufweist, wobei die wenigstens eine Eingangswelle mit zumindest einer elektrischen Antriebsmaschine des Fahrzeugs antriebswirksam verbunden ist, wobei eine Schiebemuffe drehfest und axial verschiebbar auf der Eingangswelle oder einer anderen mit der Eingangswelle antriebsverbundenen oder antriebsverbindbaren Getriebewelle angeordnet ist sowie eine erste Klauenverzahnung aufweist, wobei ein Kupplungskörper, welcher drehbar und axial unverschiebbar auf der Eingangswelle, der Ausgangswelle oder einer anderen mit der Ausgangswelle antriebsverbundenen oder antriebsverbindbaren Getriebewelle angeordnet ist, eine zweite Klauenverzahnung aufweist, wobei die Schiebemuffe zum Erzeugen einer formschlüssigen Verbindung mit dem Kupplungskörper mittels eines von einem elektrischen Aktuator betätigbaren Schaltelements axial bewegbar ist, und mit einer Sensoreinrichtung, welche zur unmittelbaren und/oder mittelbaren Erfassung von Drehwinkelstellungen und/oder Drehzahlen der Schiebemuffe sowie des Kupplungskörpers aus Sensormesswerten und/oder aus Steuerungsdaten der zumindest einen elektrischen Antriebsmaschine ausgebildet ist, sowie mit einer elektronischen Steuerungseinrichtung, welche zur Auswertung der erfassten Drehwinkelstellungsdaten und/oder Drehzahldaten der Schiebemuffe und des Kupplungskörpers sowie zur Steuerung der zumindest einen elektrischen Antriebsmaschine und des elektrischen Aktuators in Abhängigkeit von den Drehzahlwerten und/oder Drehwinkelstellungswerten ausgebildet ist.

Mittels dieser Vorrichtung ist der Betrieb einer unsynchronisierten Klauenkupplung, beziehungsweise der Betrieb eines unsynchronisierten Wechselgetriebes mit mehreren Klauenkupplungen, eines elektrisch antreibbaren Fahrzeugs unter Vermeidung von Zahn-auf-Zahn-Stellungen vorteilhaft möglich. Ungünstige Zahn-auf-Zahn-Stellungen können mit Hilfe einer Sensoreinrichtung mit bekannten Sensormitteln, wie Drehzahlmessern und/oder Drehwinkelsensoren, sowie mithilfe von Steuerungsinformationen des elektrischen Fahrzeugantriebs, welche im Fahrzeug mit elektrischen Antriebssträngen häufig ohnehin zur Verfügung stehen, frühzeitig erkannt werden.

Eine leistungsfähige elektronische Steuerungseinrichtung kann an dem elektrischen Fahrzeugantrieb sehr genau Drehzahländerungen an der Eingangswelle und damit an der mit dieser triebverbundenen Schiebemuffe vornehmen.

Der elektrische Aktuator, mit welchem die Schiebemuffe betätigbar ist, kann beispielsweise eine Schaltwalze oder eine Schaltwelle mit einem elektrischen Drehantrieb sein, welche eine Führungsnut oder eine Verzahnung aufweist, in der ein Schaltelement, beispielsweise eine Schaltgabel oder ein Schaltstift mit einem Ende im Eingriff ist und geführt wird. Dieses Schaltelement steht mit seinem anderen Ende mit der Schiebemuffe im Eingriff. Ein solcher Aktuator setzt eine Drehbewegung in eine axiale Stellbewegung der Schiebmuffe um. Eine leistungsfähige elektronische Steuerungseinrichtung kann die Drehbewegung einer Schaltwalze oder dergleichen beziehungsweise den Drehantrieb des Aktuators sehr genau steuern. Dadurch ist eine genaue zeitlich und örtlich aufgelöste Steuerung der Stellbewegung der Schiebemuffe möglich. Insbesondere kann eine Betätigungsdauer sehr genau eingestellt werden, in welcher die Schiebemuffe axial bewegt wird.

Die elektronische Steuerungseinrichtung ist mit den erfassten Informationen somit in der Lage, geeignete Steuerungsmaßnahmen an dem elektrischen Antrieb sowie an dem elektrischen Aktuator zur Betätigung der Schiebemuffe durchzuführen, welche bei einem Gangwechsel des Getriebes stets ein Einspuren der Klauen der jeweiligen Klauenkupplung ohne das Auftreten von Zahn-auf-Zahn-Stellungen gewährleisten. Die elektronische Steuerungseinrichtung kann als eine eigenständige Einheit ausgebildet sein. Alternativ dazu kann die elektronische Steuerungseinrichtung in ein vorhandenes Getriebesteuergerät oder in einer anderen vorhandenen elektronischen Einrichtung integriert sein.

Wie erwähnt, kann der mit der erfindungsgemäßen Vorrichtung steuerbare Antriebsstrang nur eine elektrische Antriebsmaschine oder mehrere elektrische Antriebsmaschinen aufweisen, mit denen die zumindest eine Eingangswelle des Wechselgetriebes antreibbar ist.

Schließlich betrifft die Erfindung auch ein Fahrzeug mit einem Elektroantrieb, wie elektrisches Nutzfahrzeug oder elektrischer Personenkraftwagen, mit einer Vorrichtung zum Betätigen einer Klauenkupplung eines Wechselgetriebes, welche gemäß dem Vorrichtungsanspruch aufgebaut und zur Durchführung eines Verfahrens gemäß wenigstens einem der Verfahrensansprüche betreibbar ist.

Die Erfindung wird nachstehend anhand von einem in der beigefügten Zeichnung dargestellten Ausführungsbeispiel näher erläutert. In der Zeichnung zeigt
Fig. 1 eine schematische Darstellung eines Nutzfahrzeugs mit einer Vorrichtung gemäß der Erfindung,
Fig. 2 eine schematische Ansicht einer Klauenkupplung im Fahrzeug gemäß Fig. 1,
Fig. 3 ein Diagramm zur Betätigung einer Schiebemuffe der Klauenkupplung, und
Fig. 4 ein Flussdiagramm zur Durchführung des Verfahrens gemäß der Erfindung zum Betätigen der Klauenkupplung.

Einige Bauelemente in den Figuren stimmen überein, sodass sie mit denselben Bezugsziffern bezeichnet sind.

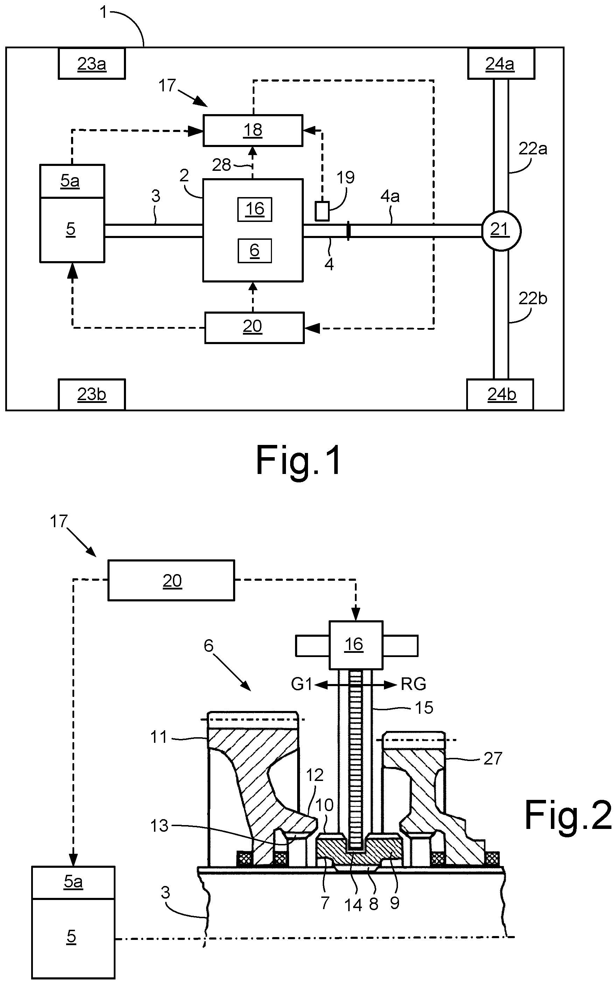

Das in der Fig. 1 dargestellte Nutzfahrzeug 1 verfügt in bekannter Weise über zwei Vorderräder 23a, 23b, zwei Hinterräder 24a, 24b, eine elektrische Antriebsmaschine 5 sowie ein Wechselgetriebe 2. Das Wechselgetriebe 2 weist eine Eingangswelle 3 und eine Ausgangswelle 4 auf. Die Ausgangswelle 4 ist mit einer Kardanwelle 4a antriebsverbunden. Die Eingangswelle 3 ist mit der elektrischen Antriebsmaschine 5 antriebsverbunden oder über eine nicht dargestellte Kupplung mit der Antriebsmaschine 5 antriebsverbindbar. Die Kardanwelle 4a ist über ein Differentialgetriebe 21 mit zwei Hinterachswellen 22a, 22b antriebsverbunden, welche antriebswirksam mit jeweils einem Hinterrad 24a, 24b verbunden sind. Der elektrischen Antriebsmaschine 5 ist ein Motorsteuergerät 5a zugeordnet, mit dem die Antriebsmaschine 5 steuerbar ist. Das Wechselgetriebe 2 weist wenigstens zwei Übersetzungsstufen auf, welche mittels mindestens einer unsynchronisierten Klauenkupplung 6 wechselweise schaltbar sind.

Der konstruktive Aufbau der Klauenkupplung 6 ist in der Fig. 2 schematisch dargestellt. Die Klauenkupplung 6 dient in diesem Beispiel über eine stellwegmittige Neutralstellung zum wechselseitigen Schalten zwischen einem ersten Gang G1 und einem Rückwärtsgang RG. Das Losrad 11 des ersten Gangs G1, nämlich eines Vorwärtsgangs, und das Losrad 30 des Rückwärtsgangs RG sind in ihrem Aufbau ähnlich. Die Beschreibung des Verfahrens gemäß der Erfindung erfolgt daher lediglich für einen Schaltvorgang der Klauenkupplung 6 von der Neutralstellung des Wechselgetriebes 2 in den ersten Gang G1. Auf eine vergleichbare Beschreibung der Schaltung des Wechselgetriebes 2 von der Neutralstellung in den Rückwärtsgang RG und der damit einhergehenden drehfesten Kopplung des Rückwärtsgang-Losrads 27 mit der Eingangswelle 3 kann hier verzichtet werden.

Die Schaltung des Wechselgetriebes 2 erfolgt mittels einer Schiebemuffe 7, welche über eine Mitnahmeverzahnung 8 axial verschiebbar und drehfest auf der Eingangswelle 3 angeordnet ist. Die Mitnahmeverzahnung 8 ist am radial inneren Umfang eines hohlzylindrischen Grundkörpers 9 der Schiebemuffe 7 ausgebildet, welche in eine Axialverzahnung am radialen Umfang der Eingangswelle 3 ausgebildet ist. Am radial äußeren Umfang des Grundkörpers 9 der Schiebemuffe 7 ist eine erste Schaltverzahnung in Form einer ersten Klauenverzahnung 10 ausgebildet, welche sich in Richtung zum Losrad 11 des ersten Gangs G1 erstreckt.

Der erste Gang G1 des Wechselgetriebes 2 ist hier lediglich durch ein Losrad 11 dargestellt, welches drehbar und axial feststehend auf der Eingangswelle 3 angeordnet ist. Dieses Losrad 11 steht im Eingriff mit einem nicht dargestellten Festrad des ersten Gangs G1, welches auf der Ausgangswelle 4 oder auf einer mit der Ausgangswelle 4 antriebsverbundenen Vorgelegewelle drehfest und axial unverschiebbar angeordnet ist. An dem Losrad 11 des ersten Gangs G1 ist einstückig ein Kupplungskörper 12 in Form eines Stützrings angeformt. Von dem Kupplungskörper 12 erstreckt sich einstückig radial innen und axial in Richtung zur Schiebemuffe 7 eine zweite Schaltverzahnung in Form einer zweiten Klauenverzahnung 13. Die beiden Klauenverzahnungen, also die Klauenverzahnung 10 der Schiebemuffe 7 und die Klauenverzahnung 13 am Kupplungskörper 12 des Losrads 11, sind als zueinander komplementäre Verzahnungen ausgebildet, welche durch eine Axialverschiebung der Schiebemuffe 7 formschlüssig miteinander verbindbar beziehungsweise voneinander trennbar sind.

Der Grundkörper 9 der Schiebemuffe 7 weist außerdem eine Ankoppelstelle für eine Aktorik in Form einer in Umfangsrichtung ausgebildeten mittigen Führungsnut 14 auf, in welche ein Ende eines Schaltelements 15 in Form einer Schaltgabel lose eingreift, sodass die Schiebmuffe 7 mittels des Schaltelements 15 in axialer Richtung kraftschlüssig sowie in Umfangsrichtung drehbar gekoppelt ist. Das radial äußere Ende des Schaltelements 15 ist mit einem elektrischen Aktuator 16 antriebsverbunden. Der elektrische Aktuator 16 weist einen elektrischen Drehantrieb auf und kann in einer bekannten Bauweise ausgebildet sein, welche in der Fig. 2 nicht näher dargestellt ist. Die Antriebsverbindung ist derart ausgebildet, dass eine Drehbewegung des Drehantriebs des Aktuators 16 in eine translatorische Bewegung des Schaltelements 15 unter Mitnahme der Schiebemuffe 7 auf der Eingangswelle 3 umgewandelt wird. Für die Erfindung ist lediglich wichtig, dass der Aktuator 16 elektronisch steuerbar ist.

In Fig. 1 ist schematisch stark vereinfacht eine Vorrichtung 17 zum Betätigen des Wechselgetriebes 2, insbesondere zur Betätigen mindestens einer Klauenkupplung in der Bauart der gerade beschriebenen Klauenkupplung 6 gemäß Fig. 2 dargestellt. Die Vorrichtung 17 weist eine Sensoreinrichtung 18 und eine elektronische Steuerungseinrichtung 20 auf. Die Sensoreinrichtung 18 ist dafür ausgebildet, um Drehzahlen und Drehwinkelstellungen der relativ zueinander drehbaren eingangs- und ausgangsseitigen Komponenten der Klauenkupplung 6, also vorliegend der Schiebemuffe 7 mit der ersten Klauenverzahnung 10 und des Losrads 11 des ersten Gangs G1 mit dem Kupplungskörper 12 sowie dessen zweiter Klauenverzahnung 13 zu ermitteln. Dafür ist die Sensoreinrichtung 18 eingangsseitig mit dem Motorsteuergerät 5a und ausgangsseitig mit der elektronischen Steuerungseinrichtung 20 drahtgebunden oder drahtlos signaltechnisch verbunden. Der Pfeil 28 veranschaulicht, dass die Sensoreinrichtung 18 die genannten Werte auch innerhalb des Wechselgetriebes 2 ermitteln kann.

Die Sensoreinrichtung 18 ist in der Lage, Drehzahlen und Drehwinkelstellungen der Eingangswelle 3, welche beispielsweise von dem Motorsteuergerät 5a zur Verfügung gestellt werden, zu erfassen und der elektronischen Steuerungseinrichtung 20 zur weiteren Verarbeitung zur Verfügung zu stellen. In der elektronischen Steuerungseinrichtung 20 können aus den von dem Motorsteuergerät 5a übermittelten Drehzahldaten und Drehwinkelstellungsdaten der Eingangswelle 3 die Drehzahl und die Drehwinkelstellung von mittelbar oder unmittelbar mit der Eingangswelle 3 antriebsverbundenen oder antriebsverbindbaren Komponenten, also vorliegend die Drehzahl und die Drehwinkelstellung der Schiebemuffe 7 mit deren erster Klauenverzahnung 10 ermittelt werden.

Die Sensoreinrichtung 18 verfügt außerdem über zumindest einen Sensor 19, welcher vorliegend an der Ausgangswelle 4 angeordnet ist, um die Drehzahl sowie die Drehwinkelstellung der Ausgangswelle 4 zu bestimmen. Bei dem Sensor 19 kann es sich beispielsweise um ein Sensorelement bekannter Bauart handeln, welches auf einem induktiven Messprinzip oder auf dem Halleffekt beruht und mit einem Inkrementenrad zusammenwirkt, welches an der Ausgangswelle 4 befestigt ist. In einem Wechselgetriebe mit mehreren Klauenkupplungen sowie mit weiteren Getriebewellen können auch weitere Sensoren zur Erfassung von Drehzahlen und Drehwinkelstellungen der relativ zueinander drehenden Komponenten vorhanden sein. Jedenfalls können über die mit dem Sensor 19 ermittelten Drehzahl sowie Drehwinkelstellung der Ausgangswelle 4 in der elektronischen Sensoreinrichtung 18, unter Berücksichtigung des Übersetzungsverhältnis des betreffenden Ganges, die Drehzahl sowie die Drehwinkelstellung des Losrads 11 des ersten Gangs G1 beziehungsweise des Kupplungskörpers 12 mit der zweiten Klauenverzahnung 13 ermittelt werden.

Die elektronische Steuerungseinrichtung 20 ist ausgangsseitig mit dem Motorsteuergerät 5a sowie mit dem elektrischen Aktuator 16 für die Betätigung der Schiebemuffe 7 drahtgebunden oder drahtlos signaltechnisch verbunden. Dadurch ist die elektronische Steuerungseinrichtung 20 in der Lage, über das Motorsteuergerät 5a bei Schaltvorgängen des Wechselgetriebes 2 die Drehzahl der elektrischen Antriebsmaschine 5 zu beeinflussen. Außerdem kann die elektronische Steuerungseinrichtung 20 durch eine Steuerung des elektrischen Aktuators 16 die Betätigung der Schiebemuffe 7 hinsichtlich des Betätigungszeitpunkts, der Stellgeschwindigkeit sowie der Betätigungsdauer ändern.

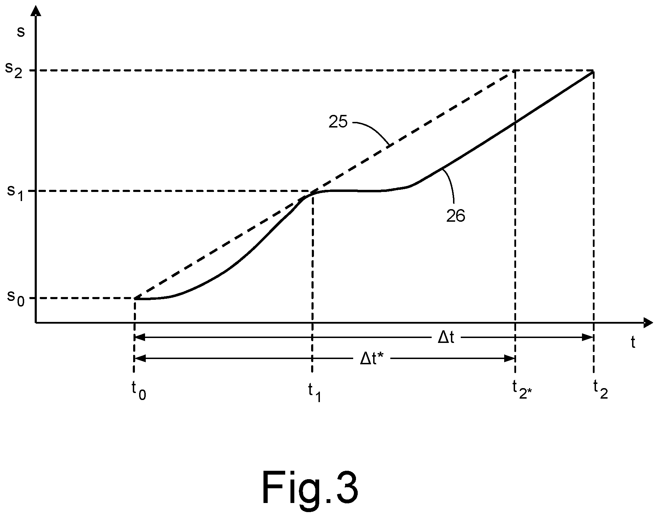

Die Fig. 3 zeigt hierzu ein Weg-Zeit-Diagramm, in dem eine erste Stellgeschwindigkeitskurve 26 für einen beispielhaften zeitlichen Verlauf der Betätigung der Schiebemuffe 7 bei einem Gangwechsel des Wechselgetriebes 2 dargestellt ist. Demnach wird die Axialverschiebung der Schiebemuffe 7 in Einrückrichtung der Klauenkupplung 6 zu einem Betätigungszeitpunkt t₀ gestartet. Zu diesem Zeitpunkt t₀ befindet sich die Schiebemuffe 7 in einer Neutralstellung s₀, also in einem ausgerücktem Zustand der Klauenkupplung 6. Die Schiebemuffe 7 wird anschließend nichtlinear beschleunigt, bis sie in einem Eingriffszeitpunkt t₁ eine Eingriffsposition s₁ erreicht hat, also diejenige axiale Stellung, an welcher die gegenüberliegenden stirnseitig äußersten Enden der Klauen der beiden miteinander zu koppelnden Klauenverzahnungen 10, 13 auf einer gedachten Linie angeordnet sind.

An dieser Eingriffsposition s₁ wird die Schiebemuffe 7 in einen kurzen Zeitraum nahezu vollständig abgebremst, um die beiden Klauenverzahnungen 10, 13 gegenseitig einzuspuren. Sobald der Einspurvorgang erfolgreich beginnt, steigt die Stellgeschwindigkeit s(t) der Schiebemuffe 7 gemäß der ersten Stellgeschwindigkeitskurve 26 linear solange an, bis die Klauenkupplung 6 nach einem vergleichsweise langen ersten Betätigungszeitraum Δt in einem Endzeitpunkt t₂ an einer Endposition s₂ vollständig eingerückt und damit die formschlüssige Verbindung der Klauenkupplung 6 hergestellt ist. Diese erste Stellgeschwindigkeitskurve 26 ist nur vereinfacht dargestellt und beispielhaft zu verstehen.

Ein nachfolgend beschriebener Ablauf eines Verfahrens gemäß der Erfindung ermöglicht die Nutzung einer im Wesentlichen linearen, zweite Stellgeschwindigkeitskurve 25 für die Verschiebebewegung der Schiebmuffe 7 mit einer nahezu konstanten Stellgeschwindigkeit s(t). Hierbei muss die Schiebemuffe 7 nach einer anfänglichen kurzen linearen Beschleunigungsphase bei Erreichen der Eingriffsposition s₁ nicht oder kaum abgebremst werden, sondern die Klauenverzahnungen 10, 13 können nahezu verzögerungsfrei ineinander eingespurt werden. Demnach wird, wie Fig. 3 zeigt, die Klauenkupplung 6 nach einem erkennbar kürzeren zweiten Betätigungszeitraum Δt* zu einem früheren Endzeitpunkt t_{2*} der Schiebemuffenbewegung vollständig eingerückt.

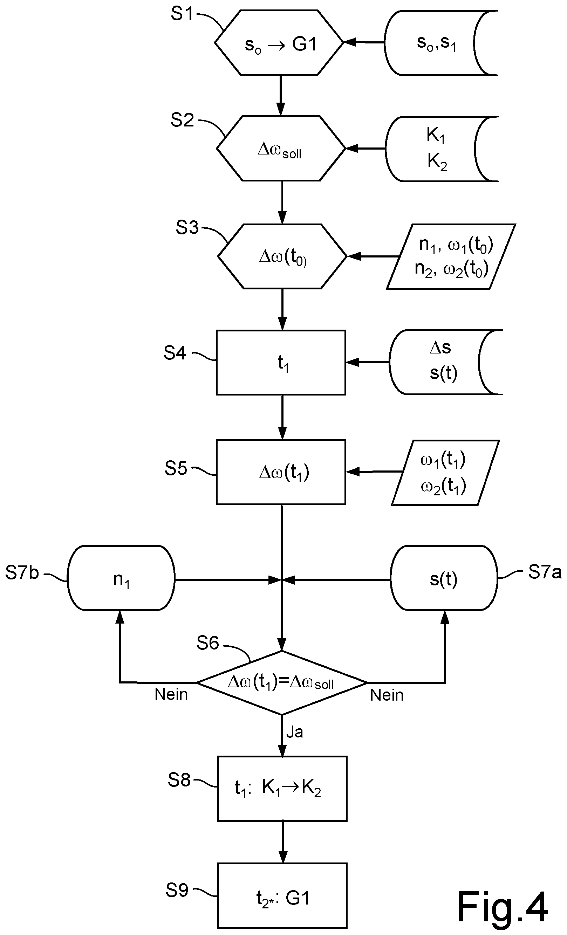

Ein die Merkmale der Erfindung aufweisendes Verfahren kann an dem Fahrzeug 1 gemäß Fig. 1 durchgeführt werden und wird nachfolgend anhand eines in der Fig. 4 dargestellten Flussdiagramms beschrieben. Das Wechselgetriebe 2 arbeitet dazu beispielhaft mit einem Algorithmus, welcher vollständig oder teilweise in der Steuerungseinrichtung 20 abgespeichert ist und dort betrieben wird. Gemäß diesem Algorithmus sind, wie es die Fig. 4 veranschaulicht, die folgenden Verfahrensschritte vorgesehen:
Schritt S1: Das Verfahren beginnt mit der Vorbereitung eines Gangwechsels des Wechselgetriebes 2, bei dem der vorherige Gang bereits ausgerückt wurde und ein neuer Gang, hier der erste Gang G1, eingerückt werden soll. Die Schiebemuffe 7 wird dazu in eine vorab definierte und abgespeicherte Neutralstellung s₀ gestellt, von welcher aus der erste Gang G1 eingelegt werden soll.
Schritt S2: Anhand der vorab abgespeicherten Werte der ersten Kontur K₁ der ersten Klauenverzahnung 10 der Schiebemuffe 7 sowie der ebenfalls abgespeicherten Werte der zweiten Kontur K₂ der zweiten Klauenverzahnung 13 des Kupplungskörpers 12 des Losrads 11 wird eine relative Drehwinkellage Δωₛₒₗₗ der Klauenverzahnungen 10, 13 zueinander ermittelt, welche ein Einspuren der Klauenkupplung 6 unter Vermeidung einer Zahn-auf-Zahn-Stellung sicher ermöglicht.
Schritt S3: In einem Zeitpunkt t₀ wird der Aktuator 16 zu dessen Betätigung angesteuert, wodurch die Schiebemuffe 7 mit einer Stellgeschwindigkeit s(t) gemäß der linearen Stellgeschwindigkeitskurve 25 in Bewegung gesetzt wird. Zu diesem Betätigungszeitpunkt t₀ werden die erfassten Informationen der Sensoreinrichtung 18, welche die Drehzahl n₁ und die Drehwinkelstellung ω₁ der Schiebemuffe 7 sowie die Drehzahl n₂ und die Drehwinkelstellung ω₂ des Losrads 11 sind, ermittelt und daraus die aktuelle Drehwinkellage Δω(t₀) dieser beiden zueinander im Betätigungszeitpunkt t₀ berechnet.
Schritt S4: Anhand des vorab abgespeicherten Stellwegs Δs der Schiebemuffe 7 zwischen der Neutralstellung s₀ und der Eingriffsposition s₁ sowie der Stellgeschwindigkeit s(t) oder gemäß der linearen Stellgeschwindigkeitskurve 25 wird ein voraussichtlicher Eingriffszeitpunkt t₁ der Schiebemuffe 7 ermittelt.
Schritt S5: Mit den zuvor eingelesenen beziehungsweise ermittelten Informationen werden die voraussichtlichen Drehwinkelstellungen ω₁(t₁), ω₂(t₁) der beiden Klauenverzahnungen 10, 13 und daraus eine voraussichtliche relative Drehwinkellage Δω(t₁) der beiden Klauenverzahnungen 10, 13 zueinander zu dem voraussichtlicher Eingriffszeitpunkt t₁ der Schiebmuffe 7 ermittelt. Die Drehzahlen n₁, n₂ der Schiebmuffe 7 und des Losrads 11 können für den Betätigungszeitraum der Schiebemuffe 7 in erster Näherung als konstant angenommen werden. Gegebenenfalls können Drehzahländerungen der Schiebemuffe 7 und/oder des Losrads 11 kontinuierlich durch die Sensoreinrichtung 18 erfasst und für den voraussichtlichen Eingriffszeitpunkt t₁ hochgerechnet werden.
Schritt S6: Die vorhergesagte relative Winkellage Δω(t₁) der beiden Klauenverzahnungen 10, 13 wird mit der Soll-Drehwinkellage Δωₛₒₗₗ verglichen. Im Fall einer relevanten Abweichung, welche eine unerwünschte Zahn-auf-Zahn-Stellung an der Eingriffsposition s₁ zur Folge hätte, wird eine Gegenmaßnahme eingeleitet. Für die Gegenmaßnahme stehen zwei Steuerungseingriffe zur Verfügung, welche einzeln als Alternativen oder zusammen in Kombination durchgeführt werden können.
Schritt S7a: Ein erster Steuerungseingriff besteht in der Veränderung der Stellgeschwindigkeit s(t) der Schiebmuffe 7 und damit der Betätigungsdauer Δt bis zum Eingriff derart, dass sich ein neuer Eingriffszeitpunkt t₁ der Schiebmuffe 7 ergibt, in dem die gewünschte Soll-Drehwinkellage Δωₛₒₗₗ erreicht ist.
Schritt 7b: Ein zweiter Steuerungseingriff besteht in einer Veränderung der Drehzahl n₁ der Schiebemuffe 7 mittels des Motorsteuergeräts 5a, welche die gewünschte relative Soll-Drehwinkellage Δωₛₒₗₗ in dem ursprünglichen oder zu dem neuen Eingriffszeitpunkt t₁ herbeiführt.
Schritt S8: Wenn die Soll-Drehwinkellage Δωₛₒₗₗ zu dem ursprünglichen oder zu dem neuen Eingriffszeitpunkt t₁ erreicht ist, werden die Klauenverzahnungen 10, 13 eingespurt, und abschließend erfolgt ein folgender Schritt, nämlich: Schritt S9 mit: Vollständiges Einrücken der Klauenkupplung 6, bis die Endposition s₂ der Schiebemuffenbewegung zur Schaltung des Getriebegangs nach einem insgesamt kürzeren Betätigungszeitraum Δt* in einem Endzeitpunkt t_{2*} erreicht ist.

### Bezugszeichenliste (Bestandteil der Beschreibung)

- 1: Fahrzeug, Nutzfahrzeug
- 2: Wechselgetriebe
- 3: Eingangswelle
- 4: Ausgangswelle
- 4a: Kardanwelle
- 5: Elektrische Antriebsmaschine
- 5a: Motorsteuergerät
- 6: Klauenkupplung
- 7: Schiebemuffe
- 8: Mitnahmeverzahnung der Schiebemuffe
- 9: Grundkörper der Schiebemuffe
- 10: Klauenverzahnung an der Schiebemuffe
- 11: Losrad eines Vorwärtsgangs
- 12: Kupplungskörper des Losrads
- 13: Klauenverzahnung am Kupplungskörper
- 14: Führungsnut der Schiebemuffe
- 15: Schaltelement, Schaltgabel
- 16: Elektrischer Aktuator
- 17: Vorrichtung zum Betätigen einer Klauenkupplung
- 18: Sensoreinrichtung
- 19: Sensor der Sensoreinrichtung
- 20: Elektronische Steuerungseinrichtung
- 21: Differentialgetriebe
- 22a: Erste Hinterachsantriebswelle
- 22b: Zweite Hinterachsantriebswelle
- 23a: Erstes Vorderrad
- 23b: Zweites Vorderrad
- 24a: Erstes Hinterrad
- 24b: Zweites Hinterrad
- 25: Lineare Stellgeschwindigkeitskurve
- 26: Nichtlineare Stellgeschwindigkeitskurve
- 27: Losrad eines Rückwärtsgangs
- 28: Pfeil, Messwerte
- G1: Erster Gang des Wechselgetriebes
- RG: Rückwärtsgang des Wechselgetriebes
- s: Position der Schiebemuffe
- s₀: Neutralstellung der Schiebemuffe
- s₁: Eingriffsposition der Schiebemuffe
- s₂: Endposition der Schiebemuffe
- s(t): Stellgeschwindigkeit der Schiebemuffe
- Δs: Stellweg der Schiebemuffe
- K₁: Kontur der ersten Klauenverzahnung
- K₂: Kontur der zweiten Klauenverzahnung
- n₁: Drehzahl der Schiebemuffe
- n₂: Drehzahl des Losrads des ersten Gangs
- t: Zeit
- t₀: Betätigungszeitpunkt
- t₁: Eingriffszeitpunkt
- t₂: Endzeitpunkt der Schiebemuffenbewegung
- t_{2*}: Früherer Endzeitpunkt der Schiebemuffenbewegung
- Δt: Längerer Betätigungszeitraum
- Δt*: Kürzerer Betätigungszeitraum
- ω₁: Drehwinkelstellung der Schiebemuffe
- ω₂: Drehwinkelstellung des Losrads des ersten Gangs
- Δωₛₒₗₗ: Relative Drehwinkellage der beiden Klauenverzahnungen zueinander
- S1 - S9: Verfahrensschritte

## Patentansprüche

1. Verfahren zum Betätigen einer Klauenkupplung (6) eines Wechselgetriebes (2) eines elektrisch antreibbaren Fahrzeugs (1), wobei das Wechselgetriebe (2) mindestens eine Eingangswelle (3) und eine Ausgangswelle (4) aufweist, wobei die wenigstens eine Eingangswelle (3) mit zumindest einer elektrischen Antriebsmaschine (5) des Fahrzeugs (1) antriebswirksam verbunden ist, wobei eine Schiebemuffe (7) drehfest und axial verschiebbar auf der Eingangswelle (3) oder einer anderen mit der Eingangswelle (3) antriebsverbundenen oder antriebsverbindbaren Getriebewelle angeordnet ist sowie eine erste Klauenverzahnung (10) aufweist, wobei ein Kupplungskörper (12) drehbar und axial unverschiebbar auf der Eingangswelle (3), der Ausgangswelle (4) oder einer anderen mit der Ausgangswelle (4) antriebsverbundenen oder antriebsverbindbaren Getriebewelle angeordnet ist sowie eine zweite Klauenverzahnung (13) aufweist, wobei die Schiebemuffe (7) zum Erzeugen einer formschlüssigen Verbindung mit dem Kupplungskörper (12) mittels eines von einem elektrischen Aktuator (16) betätigbaren Schaltelements (15) axial bewegbar ist, und bei dem zum Erzeugen der formschlüssigen Verbindung zumindest relative Drehzahlen und/oder Drehwinkelstellungen der relativ zueinander drehbaren Schiebemuffe (7) sowie des Kupplungskörpers (12) ermittelt werden, und bei dem die wenigstens eine elektrische Antriebsmaschine (5) und/oder der elektrische Aktuator (16) in Abhängigkeit von den ermittelten Drehzahlen und/oder Drehwinkelstellungen elektronisch derartig gesteuert werden, dass beim Verschieben der Schiebemuffe (7) zur Kopplung der beiden Klauenverzahnungen (10, 13) eine Zahn-auf-Zahn-Stellung der beiden Klauenverzahnungen (10, 13) vermieden wird, **dadurch gekennzeichnet, dass** zum Erzeugen der formschlüssigen Verbindung der beiden Klauenverzahnungen (10, 13) zum Zeitpunkt der Betätigung der Schiebemuffe (7) ausgehend von einer definierten Neutralstellung die Drehwinkelstellungen und die Drehzahlen der Schiebemuffe (7) sowie des Kupplungskörpers (12) relativ zueinander bestimmt werden, dass ausgehend vom Zeitpunkt der Betätigung der Schiebemuffe (7) ein voraussichtlicher Eingriffszeitpunkt zum Einspuren der Klauenverzahnung (10) der Schiebemuffe (7) in die Klauenverzahnung (13) des Kupplungskörpers (12) an einer definierten Eingriffsposition anhand einer vorgegebenen Stellgeschwindigkeitskurve sowie des zuvor ermittelten Stellwegs der Schiebemuffe (7) zwischen deren Neutralstellung und deren Eingriffsposition berechnet wird, dass die voraussichtlichen Drehwinkelstellungen der Schiebemuffe (7) und des Kupplungskörpers (12) relativ zueinander zum Eingriffszeitpunkt berechnet werden, dass eine Zahn-auf-Zahn-Stellung oder keine Zahn-auf-Zahn-Stellung zum berechneten Eingriffszeitpunkt anhand der voraussichtlichen Drehwinkelstellungen der Schiebemuffe (7) und des Kupplungskörpers (12) relativ zueinander vorhergesagt wird, und dass im Fall einer vorhergesagten Zahn-auf-Zahn-Stellung Steuerungsmaßnahmen an der wenigstens einen elektrischen Antriebsmaschine (5) und/oder an dem die Schiebemuffe (7) betätigenden elektrischen Aktuator (16) durchgeführt werden, welche die relative Drehwinkellage der Schiebemuffe (7) und des Kupplungskörpers (12) zueinander und/oder die Bewegungsdauer der Schiebemuffe (7) während des Schaltvorgangs derartig verändern, dass beim Erreichen der Eingriffsposition ein verzögerungsfreies formschlüssiges Einspuren der Klauenverzahnungen (10, 13) erfolgen wird.

2. Verfahren nach Anspruch 1, **dadurch gekennzeichnet, dass** im Fall einer vorhergesagten Zahn-auf-Zahn-Stellung die Drehzahl der wenigstens einen Eingangswelle (3) mittels einer Änderung der Drehzahl der zumindest einen elektrischen Antriebsmaschine (5) so verändert wird, dass die Drehwinkelstellung der mit der Eingangswelle (3) drehfest verbundenen Schiebemuffe (7) bei deren Erreichen der Eingriffsposition ein verzögerungsfreies Einspuren der Klauenverzahnungen von Schiebemuffe (7) und Kupplungskörper (12) ermöglicht.

3. Verfahren nach Anspruch 1 oder 2, **dadurch gekennzeichnet, dass** im Fall einer vorhergesagten Zahn-auf-Zahn-Stellung zunächst ausgehend von dem Zeitpunkt der Betätigung der Schiebemuffe (7) ein neuer Eingriffszeitpunkt berechnet wird, zu dem die Drehwinkelstellungen der Schiebemuffe (7) und des Kupplungskörpers (12) relativ zueinander ein Einspuren der Klauenverzahnungen (10, 13) ermöglichen, dass anschließend eine an den neuen Eingriffszeitpunkt angepasste neue Stellgeschwindigkeitskurve der Schiebemuffe (7) berechnet wird, und dass dann die Schiebemuffe (7) mittels des elektrischen Aktuators (16) gemäß der berechneten neuen Stellgeschwindigkeitskurve axial verschoben wird, um beim Erreichen der Eingriffsposition die Klauenverzahnung (10) der Schiebemuffe (7) verzögerungsfrei in die Klauenverzahnung (13) des Kupplungskörpers (12) formschlüssig einzuspuren.

4. Vorrichtung (17) zum Betätigen einer Klauenkupplung (6) eines Wechselgetriebes (2) eines elektrisch antreibbaren Fahrzeugs (1), wobei das Wechselgetriebe (2) mindestens eine Eingangswelle (3) und eine Ausgangswelle (4) aufweist, wobei die Eingangswelle (3) mit zumindest einer elektrischen Antriebsmaschine (5) des Fahrzeugs (1) antriebswirksam verbunden ist, wobei eine Schiebemuffe (7) drehfest und axial verschiebbar auf der Eingangswelle (3) oder einer anderen mit der Eingangswelle (3) antriebsverbundenen oder antriebsverbindbaren Getriebewelle angeordnet ist sowie eine erste Klauenverzahnung (10) aufweist, wobei ein Kupplungskörper (12), welcher drehbar und axial unverschiebbar auf der Eingangswelle (3), der Ausgangswelle (4) oder einer anderen mit der Ausgangswelle (4) antriebsverbundenen oder antriebsverbindbaren Getriebewelle angeordnet ist, eine zweite Klauenverzahnung (13) aufweist, wobei die Schiebemuffe (7) zum Erzeugen einer formschlüssigen Verbindung mit dem Kupplungskörper (12) mittels eines von einem elektrischen Aktuator (16) betätigbaren Schaltelements (15) axial bewegbar ist, und mit einer Sensoreinrichtung (18), welche zur unmittelbaren und/oder mittelbaren Erfassung von Drehwinkelstellungen und/oder Drehzahlen der Schiebemuffe (7) sowie des Kupplungskörpers (12) aus Sensormesswerten und/oder aus Steuerungsdaten der wenigstens einen elektrischen Antriebsmaschine (5) ausgebildet ist, sowie mit einer elektronischen Steuerungseinrichtung (20), welche zur Auswertung der erfassten Drehwinkelstellungsdaten und/oder Drehzahldaten der Schiebemuffe (7) und des Kupplungskörpers (12) sowie zur Steuerung der zumindest einen elektrischen Antriebsmaschine (5) und des elektrischen Aktuators (16) in Abhängigkeit von den Drehzahlwerten und/oder Drehwinkelstellungswerten ausgebildet ist.

5. Fahrzeug (1) mit einem Elektroantrieb, wie elektrisches Nutzfahrzeug oder elektrischer Personenkraftwagen, mit einer Vorrichtung (17) zum Betätigen einer Klauenkupplung (6) eines Wechselgetriebes (2), welche gemäß dem Vorrichtungsanspruch aufgebaut und zur Durchführung eines Verfahrens gemäß einem der Verfahrensansprüche betreibbar ist.
